# FASCICULE DE BREVET EUROPEEN

(11) **EP 3 941 885 B1**
(45) Date de publication et mention de la délivrance du brevet: **20.12.2023**
(21) Numéro de dépôt: 20711595.7
(22) Date de dépôt: 19.03.2020
(51) Int. Cl.: C03C 17/34

(54) **ARTICLE VITROCERAMIQUE**
GLASKERAMIKTEIL
GLASS-CERAMIC ITEM

(30) Priorité: 22.03.2019 FR 1903012
(43) Date de publication de la demande: 26.01.2022
(73) Titulaire: Eurokera S.N.C., 02400 Château-Thierry (FR)
(72) Inventeur: JEGOREL, Théo, 75019 PARIS (FR); LUAIS, Erwann, 02400 CHATEAU THIERRY (FR)
(74) Mandataire: Saint-Gobain Recherche
(86) Numéro de dépôt international: PCT/EP2020/057564
(87) Numéro de publication internationale: WO 2020/193349

(56) Documents cités:
- US-A- 5 594 231
- US-A1- 2007 056 961
- US-A1- 2014 376 094
- US-A1- 2015 284 840

## Description

La présente invention concerne le domaine des vitrocéramiques. Plus précisément, elle concerne un article, ou produit, en vitrocéramique, notamment une plaque vitrocéramique destiné(e) à servir de surface de meuble et/ou de surface de cuisson. Par article vitrocéramique ou en vitrocéramique, on entend un article à base d'un substrat (tel qu'une plaque) en matériau vitrocéramique, ledit substrat pouvant le cas échéant être muni d'accessoires ou d'éléments supplémentaires, décoratifs ou fonctionnels, requis pour son usage final, l'article pouvant désigner tout aussi bien le substrat seul que celui muni d'équipements supplémentaires (par exemple une plaque de cuisson munie de son bandeau de commande, de ses éléments de chauffage, etc).

Une vitrocéramique est à l'origine un verre, dit verre précurseur ou verre-mère ou green-glass, dont la composition chimique spécifique permet de provoquer par des traitements thermiques adaptés, dits de céramisation, une cristallisation contrôlée. Cette structure spécifique en partie cristallisée confère à la vitrocéramique des propriétés uniques.

Il existe actuellement différents types de plaques en vitrocéramique, chaque variante étant le résultat d'études importantes et de nombreux essais, étant donné qu'il est très délicat de faire des modifications sur ces plaques et/ou sur leur procédé d'obtention sans risquer un effet défavorable sur les propriétés recherchées : en particulier, pour pouvoir être utilisée comme plaque de cuisson, une plaque vitrocéramique doit généralement présenter une transmission dans les longueurs d'onde du domaine du visible à la fois suffisamment basse pour masquer au moins une partie des éléments de chauffage sous-jacents au repos et suffisamment élevée pour que, selon les cas (chauffage radiant, chauffage par induction, etc), l'utilisateur puisse détecter visuellement les éléments de chauffage en état de marche dans un but de sécurité; elle doit également présenter une transmission élevée dans les longueurs d'onde du domaine de l'infrarouge dans le cas notamment des plaques à foyers radiants. Les plaques vitrocéramiques doivent également présenter une résistance mécanique suffisante telle qu'exigée dans leur domaine d'utilisation. En particulier, pour pouvoir être utilisée comme plaque de cuisson dans le domaine de l'électroménager ou comme surface de meuble, une plaque vitrocéramique doit présenter une bonne résistance à la pression, aux chocs (support et chute d'ustensiles, etc), etc.

Traditionnellement, les plaques vitrocéramiques sont utilisées comme plaques de cuisson, ou elles peuvent aussi être associées à des éléments de chauffage dans d'autres applications, par exemple pour former des inserts de cheminées. Depuis peu, leur utilisation s'étend à d'autres domaines de la vie quotidienne : les plaques vitrocéramiques peuvent ainsi servir de surfaces de meuble, notamment pour former des plans de travail, des ilots centraux, des consoles, etc. la surface qu'elles occupent dans ces nouvelles applications étant plus importante que par le passé.

De par l'utilisation répétée d'ustensiles à leur surface (tels que les casseroles pour les plaques de cuisson ou divers éléments ménagers pour les surfaces de travail), les plaques en vitrocéramique peuvent à l'usage se rayer sous l'effet de la friction avec ces ustensiles, voire aussi se colorer sous l'effet de la friction avec des métaux. La nourriture pouvant adhérer à la surface de ses plaques ou ces plaques pouvant présenter des problèmes de traces de doigts, l'utilisation de produits de nettoyage tels que des éponges à récurer plus abrasives peut également être une source supplémentaire de rayures.

Les plaques peuvent par ailleurs présenter différents revêtements à but fonctionnel et/ou décoratif, les plus courants étant les émaux, à base de fritte de verre et de pigments, et certaines peintures résistant à haute température, par exemple à base de résines silicones. D'autres revêtements existent également, notamment à base de couches ou d'empilements de couches, telles que des couches réfléchissantes pour obtenir des effets de contrastes, mais ces revêtements sont généralement plus onéreux et leur fabrication est souvent plus délicate, cf. les documents US 2015/284840 ou US 2007/056961.

Le fait d'ajouter un revêtement peut également complexifier l'entretien des plaques, les revêtements pouvant en effet s'altérer lors du nettoyage ou altérer les propriétés optiques ou mécaniques de la vitrocéramique.

Une préoccupation constante dans le domaine des vitrocéramiques, que la vitrocéramique soit revêtue ou non, reste de pouvoir offrir un produit d'entretien facile, conservant son aspect et ses propriétés dans le temps.

La présente invention à chercher à pallier les précédents inconvénients des plaques vitrocéramiques en termes de dégradations liées à la friction d'ustensiles (rayures, coloration par friction de métal) en proposant une plaque vitrocéramique améliorée, en particulier une nouvelle plaque vitrocéramique destinée à être utilisée avec un ou des éléments de chauffage telle qu'une plaque de cuisson, ou destinée à servir de surface de meuble, cette plaque permettant de limiter l'apparition de rayures à sa surface dans son usage quotidien et de limiter également l'apparition de colorations dues aux frottements avec des ustensiles métalliques, sans pour autant nuire aux autres propriétés recherchées pour son usage ni à son aspect esthétique.

Ce but est atteint grâce au produit vitrocéramique mis au point selon l'invention dans lequel l'apparition des rayures ou des colorations est réduite par l'application d'un revêtement spécifique, ledit revêtement étant sélectionné suivant des critères précis afin d'obtenir l'effet recherché. Les inventeurs ont en effet mis en évidence que le dépôt d'un empilement de couches combinant une couche épaisse de matériau dur (matériau par exemple de type nitrure de silicium et/ou d'aluminium) avec une couche de couverture de faible épaisseur présentant un bas coefficient de frottement en surface de la vitrocéramique (notamment sur la face destinée à être en contact avec des ustensiles, généralement la face supérieure de la plaque), avait des effets très favorables sur la réduction des rayures et sur la réduction des effets de coloration dus aux frottements avec du métal.

La présente invention concerne donc un nouvel article vitrocéramique, comprenant au moins un substrat, tel qu'une plaque, en vitrocéramique, ledit substrat étant revêtu en au moins une zone d'au moins un empilement formé :
- 1) d'au moins une couche de nitrure métallique ou de nitrure de métalloïde(s), ladite couche présentant une épaisseur d'au moins 200 nm, de préférence d'au moins 700 nm, et en particulier d'au moins 1 µm, et une dureté d'au moins 14 GPa, et
- 2) d'au moins une couche d'oxyde métallique ou de nitrure de métalloïde(s), ladite couche présentant une épaisseur inférieure à 14 nm, de préférence entre 1 et 10 nm, et présentant un coefficient de frottement inférieur à 0.25, lesdites couches 1 et 2 étant au contact l'une de l'autre, la couche 2 étant plus éloignée du substrat que la couche 1.

De préférence, la couche 1 présente également un module élastique supérieur à 140 GPa, en particulier supérieur à 150 GPa.

La dureté H et le module élastique E de la couche considérée sont mesurés à l'aide d'un nanoindenteur de type DCMII-400 commercialisé par la société CSM Instruments, la pointe utilisée étant une pointe diamant pyramidale de type Berkovich à 3 faces, selon la norme NF EN ISO 14577, sur la couche déposée en aplat (avec un taux de recouvrement de 100%) sur la vitrocéramique.

Le coefficient de frottement est mesuré en utilisant un appareil microscratch CSM commercialisé par CSM instrument, une force constante de 1N étant appliquée sur une bille d'acier inox d'1 cm de diamètre se déplaçant sur une distance de 2 cm à vitesse constante, trente passages (15 aller-retours) étant réalisés en tout, le coefficient de frottement étant le rapport entre la force tangentielle et la force normale mesurée par des capteurs.

La présente invention a mis en évidence que la sélection de couches opérée permet une synergie entre lesdites couches définissant l'empilement afin d'obtenir les propriétés recherchées. En particulier, l'application d'une couche dite "dure" (par exemple de dureté supérieure à le vitrocéramique qui est de l'ordre de 7,5 GPa), seule, limite les rayures mais peut abraser le fond d'ustensiles en métal et générer le cas échéant des marques métalliques, tandis que l'application d'une simple couche lubrifiante limite les dépôts métalliques mais cette couche est rayable, ces rayures étant visibles si leur profondeur excède l'épaisseur de la couche. Combinées et avec les paramètres de sélection donnés selon l'invention, ces deux types de couches s'avèrent dans la présente invention limiter les rayures et les dépôts métalliques, en particulier les rayures opérées à la surface de la couche lubrifiante de très faible épaisseur sélectionnée combinée à la couche dure sélectionnée n'étant notamment pas visibles à l'oeil nu. L'empilement déposé selon l'invention augmente ainsi la durabilité des plaques en permettant à la fois de réduire considérablement l'apparition de rayures et de limiter l'apparition de colorations dues aux frottements d'ustensiles métalliques (tels que des casseroles).

Le produit selon l'invention présente également une bonne adhérence de l'empilement au substrat vitrocéramique (sans avoir nécessité de traitement préalable du support et/ou l'utilisation d'un promoteur d'adhésion, d'une couche d'accrochage ou d'un primaire) ou à toute couche adjacente éventuellement présente sur le substrat. Cet empilement ne montre en particulier aucune délamination après un choc thermique (par exemple aux environs de 600°C), et résiste à de hautes températures. Le substrat revêtu présente une bonne stabilité thermique et peut être utilisé avec différentes sources de chauffage (à induction, radiantes, etc). L'empilement ne fragilise pas de surcroit mécaniquement le substrat vitrocéramique.

De préférence la couche 1 de l'empilement est une couche de ou à base de nitrure de silicium et/ou d'aluminium et/ou de zirconium et/ou de titane (c'est-à-dire de nitrure de silicium ou de nitrure d'aluminium ou de nitrure de zirconium ou de nitrure de titane ou de nitrure de silicium aluminium ou de nitrure de silicium zirconium ou de nitrure de silicium zirconium dopé à l'aluminium, etc).

La couche 2 précédemment définie présente avantageusement des propriétés lubrifiantes et contribue à une réduction particulièrement importante de la sensibilité à la rayure et à la coloration de l'empilement. De préférence cette couche 2 est une couche de ou à base de : oxyde de titane ou d'oxyde de titane zirconium, ou de nitrure de bore, ou d'oxyde de zirconium, l'une ou l'autre de ces couches pouvant également être dopée.

Chaque couche de nitrure ou d'oxyde métallique ou de nitrure de métalloïde précitée est avantageusement constituée essentiellement (à au moins 85% en poids), voire uniquement (à l'exception des impuretés éventuellement présentes qui ne représentent dans ce cas pas plus de 5% de la couche), d'azote (pour les nitrures) ou d'oxygène (pour les oxydes), et du ou des métaux ou métalloïdes cités dans son nom. L'appellation « nitrure métallique ou de métalloïde(s)" ou "oxyde métallique" n'exclue pas le cas échéant la présence d'autres éléments chimiques que ceux qui sont cités dans le nom du nitrure ou de l'oxyde concerné, ni ne préjuge de la stoechiométrie réelle de la couche. Chaque couche peut notamment être dopée ou comprendre une faible quantité d'un ou plusieurs éléments chimiques ajoutés en tant que dopants dans les cibles utilisées, dans le but d'augmenter leur conductivité électronique et de faciliter ainsi le dépôt par la technique de pulvérisation cathodique magnétron. Le taux de dopant(s) ou d'autres composants ou éléments chimiques que ceux cités dans la couche concernée est cependant inférieur à 15% en poids (dans la cible et dans la couche), de préférence inférieur à 10% en poids, voire nul.

La couche 1 de l'empilement précité est une couche épaisse, en particulier plus épaisse que les couches minces habituellement déposées par magnétron (dont l'épaisseur (physique) n'excède pas de l'ordre de 100 nm), l'épaisseur (physique) de ladite couche étant d'au moins 200 nm, de préférence d'au moins 700 nm, et de façon particulièrement avantageuse d'au moins 1000 nm (1 µm), et pouvant aller notamment jusqu'à 5000 nm, et de préférence n'excédant pas 2500 nm, voire n'excédant pas 2000 nm, en particulier étant comprise entre 1000 et 1500 nm. A contrario, la couche 2 présente une faible épaisseur, inférieure à 14 nm, en particulier inférieure ou égale à 10 nm et supérieure ou égale à 1 nm, de préférence comprise entre 2 et 10 nm, notamment de l'ordre de 4 -8 nm.

Avantageusement, la couche 1 présente une dureté H supérieure à 14 GPa, et en particulier supérieure à 20 GPa, voire supérieure à 30 GPa. Cette couche présente également un module d'élasticité E supérieur à 140 GPa, en particulier supérieur à 150 GPa, voire de 200 GPa ou plus.

Dans la présente invention, un seul empilement de couches 1 et 2 est en particulier suffisant pour obtenir les améliorations selon l'invention. Par couche on entend une couche uniforme d'un même matériau, même si par exemple ladite couche a été obtenue en plusieurs passes à partir d'une même cible. Le revêtement incluant l'empilement sélectionné selon l'invention peut ainsi ne contenir avec avantages qu'un seul empilement tel que précité, voire ne contenir que ledit empilement.

Il n'est pas exclu cependant d'utiliser un empilement de couches incluant l'empilement précité et une ou plusieurs autres couches de part et/ou d'autre de l'empilement (ou en d'autres termes une ou plusieurs autres couches sur ou sous l'empilement précité), le revêtement (ou l'empilement total) formé par ces couches augmentant la durabilité des plaques de par la présence de l'empilement selon l'invention.

Le revêtement incluant au moins l'empilement selon l'invention peut par exemple comprendre, entre le substrat et ledit empilement, au moins une couche, ou un empilement de couches, influant par exemple sur l'aspect en réflexion de la plaque ou pouvant servir à bloquer une éventuelle migration d'ions ou pouvant servir de couche d'adhésion, etc, telle qu'une couche d'oxynitrure de silicium ou de nitrure de silicium ou encore une couche d'adhésion en silice ou SiOx, l'épaisseur (physique) de cette ou de ces couches étant de préférence comprise dans un domaine allant de 1 à 30 nm.

Dans un mode de réalisation avantageux, l'empilement selon l'invention est déposé directement au contact du substrat en vitrocéramique (ou en d'autres termes, dans le produit, est (directement) en contact avec ladite vitrocéramique), en au moins l'une de ses faces (de préférence sur sa face destinée à être tournée vers l'utilisateur en position d'utilisation, ou face supérieure ou externe, l'autre face (inférieure ou interne) étant généralement cachée en position d'utilisation), sans autre couche de revêtement sous-jacente.

Dans un autre mode de réalisation alternatif ou cumulatif, l'empilement selon l'invention est en contact avec l'atmosphère ambiante (en d'autres termes, il n'y a pas d'autres couches ou revêtement au-dessus, cet empilement se trouvant côté atmosphère ou étant le plus éloigné de la vitrocéramique s'il y a d'autres couches).

L'épaisseur totale du revêtement (incluant l'empilement et d'autres couches éventuelles) n'excède pas préférentiellement 5000 nm.

L'empilement peut couvrir une partie seulement du substrat, ou toute une face (en particulier une face principale), par exemple la face supérieure en position d'utilisation, particulièrement sujette à nettoyage. En particulier, le substrat en vitrocéramique est muni sur sa face supérieure ou externe dudit empilement selon l'invention, seul ou faisant partie d'un revêtement incluant d'autre(s) couche(s).

L'article (ou produit) vitrocéramique selon l'invention est en particulier une plaque, ou un dispositif ou appareil, de cuisson ou tout article mobilier intégrant (ou comprenant, ou formé de) au moins un substrat en (matériau) vitrocéramique (le substrat étant le plus couramment sous forme d'une plaque, venant s'intégrer ou se monter dans le meuble et/ou combinée à d'autres éléments pour former le meuble), ledit substrat pouvant le cas échéant présenter des zones à caractère d'affichage (en combinaison par exemple avec des sources émettant de la lumière) ou des zones décorées ou être combiné avec des éléments chauffants. Dans son application la plus courante, l'article selon l'invention est destiné à servir de plaque de cuisson, cette plaque étant généralement destinée à être intégrée dans une table de cuisson ou cuisinière comprenant également des éléments chauffants, par exemple des foyers radiants ou halogènes ou des éléments de chauffage par induction. Dans une autre application avantageuse, l'article selon l'invention est un plan de travail en vitrocéramique ou un ilot central, le cas échéant avec différents affichages et sans nécessairement de zones de cuisson, voire un meuble de type console (le substrat formant par exemple la partie supérieure), etc..

Le substrat (ou l'article selon l'invention lui-même s'il n'est formé que du substrat) est généralement (sous forme de) une plaque, destinée notamment à être utilisée avec, en particulier à couvrir ou recevoir, au moins une source lumineuse et/ou un élément de chauffage ou destinée à servir de surface de meuble. Ce substrat (ou respectivement cette plaque) est généralement de forme géométrique, en particulier rectangulaire, voire carrée, voire circulaire ou ovale, etc, et présente généralement une face tournée vers l'utilisateur en position d'utilisation (ou face visible ou externe, généralement la face supérieure en position d'utilisation), une autre face généralement cachée, par exemple dans un châssis ou caisson de meuble, en position d'utilisation (ou face interne, généralement la face inférieure en position d'utilisation), et une tranche (ou chant ou épaisseur). La face supérieure ou externe est généralement plane et lisse mais peut aussi présenter localement au moins une zone en relief et/ou au moins une zone en creux et/ou au moins une ouverture et/ou des bords biseautés, ces variations de forme constituant notamment des variations continues de la plaque. La face inférieure ou interne peut également être plane et lisse ou munie de picots.

L'épaisseur du substrat vitrocéramique est généralement d'au moins 2 mm, notamment d'au moins 2.5 mm, et est avantageusement inférieure à 15 mm, en particulier est de l'ordre de 3 à 15 mm, notamment de l'ordre de 3 à 8 mm ou de l'ordre de 3 à 6 mm. Le substrat est de préférence une plaque plane ou quasi-plane (en particulier avec une flèche inférieure à 0,1% de la diagonale de la plaque, et de préférence de l'ordre de zéro).

Le substrat peut être à base de toute vitrocéramique, ce substrat présentant avantageusement un CTE nul ou quasi-nul, en particulier inférieur (en valeur absolue) à 30.10⁻⁷ K⁻¹ entre 20 et 700°C, notamment inférieur à 15.10⁻⁷K⁻¹, voire inférieur à 5.10⁻⁷ K⁻¹ entre 20 et 700°C.

L'invention est particulièrement avantageuse pour les substrats d'aspect sombre où les rayures se voient plus facilement, ces substrats étant faiblement transmissifs et peu diffusants, et étant notamment à base de toute vitrocéramique ayant, de manière intrinsèque, une transmission lumineuse TL inférieure à 40%, en particulier inférieure à 5%, notamment de 0.2 à 2% pour des vitrocéramiques jusqu'à 6 mm d'épaisseur, et une transmission optique (déterminée de façon connue en faisant le rapport entre l'intensité transmise et l'intensité incidente à une longueur d'onde donnée) entre 0.5 et 3% pour une longueur d'onde de 625 nm comprise dans le domaine du visible. Par «de manière intrinsèque», on entend que le substrat possède une telle transmission en lui-même, sans la présence d'un quelconque revêtement. Les mesures optiques sont faites selon la norme EN 410. En particulier, la transmission lumineuse TL est mesurée selon la norme EN 410 en utilisant l'illuminant D65, et est la transmission totale (notamment intégrée dans le domaine du visible et pondérée par la courbe de sensibilité de l'œil humain), tenant compte à la fois de la transmission directe et de l'éventuelle transmission diffuse, la mesure étant faite par exemple à l'aide d'un spectrophotomètre muni d'une sphère intégrante (en particulier avec le spectrophotomètre commercialisé par la société Perkin Elmer sous la référence Lambda 950).

En particulier, le substrat est un substrat d'aspect noir ou brun, permettant, en combinaison avec des sources lumineuses placées dessous, d'afficher des zones lumineuses ou des décors, tout en masquant les éventuels éléments sous-jacents. Il peut être notamment à base d'une vitrocéramique noire comprenant des cristaux de structure β-quartz au sein d'une phase vitreuse résiduelle, la valeur absolue de son coefficient de dilatation étant avantageusement inférieure ou égale à 15.10⁻⁷K⁻¹, voire à 5.10⁻⁷K⁻¹, telle que la vitrocéramique des plaques commercialisées sous le nom Kerablack+ par la société Eurokera. Il peut s'agir notamment d'une vitrocéramique de composition telle que décrite dans la demande de brevet EP0437228 ou US5070045 ou FR2657079, ou d'une vitrocéramique affinée à l'étain présentant un taux d'oxydes d'arsenic préférentiellement inférieur à 0.1 %, comme décrite par exemple dans la demande de brevet WO2012/156444, ou encore d'une vitrocéramique affinée au(x) sulfure(s) comme décrit dans la demande de brevet WO20080531 10, etc.

La présente invention peut également s'appliquer dans le cas où le substrat est plus clair, par exemple pour un substrat transparent, revêtu le cas échéant d'un revêtement opacifiant, généralement en peinture, sur sa face inférieure, tel qu'une plaque commercialisée sous le nom Keralite^{®} par la société Eurokera. Conformément à l'invention, le substrat vitrocéramique considéré est revêtu en une ou plusieurs zones (ou au moins une zone dudit substrat est revêtue), plus particulièrement en surface, sur au moins une partie d'une face, avantageusement sur au moins une partie de la face tournée vers l'utilisateur en position d'utilisation et/ou nécessitant une réduction de la visibilité des rayures et colorations, généralement la face supérieure ou externe en position d'utilisation, et en particulier est revêtu sur la totalité de ladite face. Il est revêtu d'au moins (ou par au moins) l'empilement défini selon l'invention ou un revêtement comportant ledit empilement.

Le substrat selon l'invention peut le cas échéant être revêtu d'autres revêtements ou couches à effet fonctionnel (couche anti-débordement, couche opacifiante, etc) et/ou décoratif, en particulier localisés, tels que des motifs habituels à base d'émaux (par exemple en face supérieure pour former des motifs simples ou des logos) ou une couche de peinture opacifiante sur la face inférieure du substrat, etc. En particulier, le substrat peut être revêtu d'au moins une couche d'émail et/ou de peinture, en particulier de type lustre, localisée ou non, au moins en partie ou en totalité sur (en particulier côté atmosphère) ou sous (en particulier au contact du substrat) l'empilement selon l'invention, ladite couche d'émail ou de peinture/lustre pouvant être au contact de l'empilement selon l'invention. Par peinture de type lustre on entend en particulier une peinture constituée d'oxydes métalliques et dénuée de pigments, cette peinture ou lustre présentant notamment un indice de réfraction supérieur à 1.54. L'épaisseur d'une telle couche de peinture peut notamment être comprise entre 10 et 100 nm.

L'article selon l'invention peut en outre comprendre, associés ou combinés au substrat, une ou plusieurs sources lumineuses et/ou un ou plusieurs éléments de chauffage (ou éléments chauffants, tels qu'un ou plusieurs éléments radiants ou halogènes et/ou un ou plusieurs brûleurs à gaz atmosphérique et/ou un ou plusieurs moyens de chauffage par induction), généralement placés en face inférieure du substrat. La ou les sources peuvent être intégrées dans ou couplées à une ou des structure(s) de type afficheur(s), à un bandeau de commande électronique à touches sensitives et affichage digital, etc, et sont avantageusement formées par des diodes électroluminescentes, plus ou moins espacées, éventuellement associées à un ou plusieurs guides optiques. L'article peut également être muni de (ou associé avec des) élément(s) fonctionnel(s) supplémentaire(s) (cadre, connecteur(s), câble(s), élément(s) de commande), etc.

L'invention a ainsi permis la mise au point d'un produit vitrocéramique à surface plus résistante aux rayures et colorations aux endroits souhaités (par exemple sur l'ensemble d'une face ou sur seulement quelques zones, par exemple des zones plus exposées aux manipulations ou rayures, telles que des zones de chauffage), en même temps que le produit conserve une résistance mécanique telle que requise pour diverses utilisations (notamment pour son utilisation comme plaque de cuisson). La solution selon la présente invention permet donc d'obtenir de façon simple et économique, sans opération complexe (la couche pouvant être déposée par des techniques de dépôt sous pression réduite tels que la pulvérisation cathodique, comme indiqué ultérieurement), de façon durable et avec une grande flexibilité, des zones de plus grande résistance aux rayures et colorations dans toute zone souhaitée du produit, et ceci même lorsque ces zones sont destinées à être soumises à des températures élevées. L'article selon l'invention présente notamment une bonne tenue thermique compatible avec l'utilisation de divers types de chauffages, et ne pose pas de problèmes d'entretien. Le produit selon l'invention ne subit en particulier pas de dégradation thermique à des températures supérieures à 400°C pouvant être atteintes notamment dans des applications telles que l'utilisation en tant que plaques de cuisson.

La présente invention concerne également un procédé de fabrication de l'article vitrocéramique selon l'invention, à partir d'un substrat en vitrocéramique dans lequel on dépose (ou applique), sur au moins une zone dudit substrat
1) au moins une couche de nitrure métallique ou de nitrure de métalloïde(s), ladite couche présentant une épaisseur d'au moins 200 nm, de préférence d'au moins 700 nm, et en particulier d'au moins 1 µm, et une dureté d'au moins 14 GPa, puis - 2) au moins une couche d'oxyde métallique ou de nitrure de métalloïde(s), ladite couche présentant une épaisseur inférieure à 14 nm, de préférence entre 1 et 10 nm, et présentant un coefficient de frottement inférieur à 0.25, lesdites couches 1 et 2 étant au contact l'une de l'autre.

L'application ou dépôt de chaque couche de l'empilement selon l'invention peut s'effectuer par toute technique appropriée et rapide permettant notamment de faire des aplats ou couches uniformes de ce type de couches, notamment, pour la couche 1 en particulier, voire pour la couche 2, par procédé de dépôt sous pression réduite tel que pulvérisation cathodique, notamment assistée par magnétron, ou encore dépôt chimique en phase vapeur (CVD), le cas échéant assisté par champ plasma (PECVD). L'application de la couche 1 notamment se fait de préférence par pulvérisation cathodique, notamment assistée par magnétron, ce dépôt se faisant avec un bon rendement et une bonne vitesse de dépôt. La couche 2 peut également être déposée par pulvérisation cathodique ou peut être déposée également par voie liquide, par exemple par voie sol-gel, sérigraphie, enduction centrifuge (spin coating), trempage (deep coating), etc. Les autres couches éventuelles d'oxydes ou nitrures du même revêtement peuvent également être déposées le cas échéant par le ou les mêmes modes de dépôt que précédemment (les dépôts étant notamment successifs), les autres types de couches éventuellement présentes (émail, lustre) sur le substrat étant déposés indépendamment par toute technique habituelle appropriée (telle que la sérigraphie ou le jet d'encre pour les émaux).

La pulvérisation cathodique utilisée préférentiellement est en particulier du type AC (courant alternatif), DC (courant continu) ou de façon particulièrement préférée de type DC pulsé, selon le type de générateur employé pour polariser la cathode. Les cibles sont par exemple planaires ou tubulaires (sous la forme de tubes en rotation).

Le dépôt par pulvérisation cathodique se fait notamment à l'aide d'une cible appropriée dans une atmosphère constituée de gaz plasmagène (généralement l'argon) et d'azote (pour les nitrures) et/ou d'oxygène (pour les oxydes), dopée le cas échéant (par exemple avec de l'aluminium ou du bore) pour augmenter sa conductivité électronique. Les espèces actives du plasma, en bombardant la cible, arrachent lesdits éléments, qui se déposent sur le substrat en formant la couche désirée et/ou réagissent avec le gaz contenu dans le plasma pour former ladite couche. Avantageusement, l'atmosphère (constituée de gaz plasmagène) lors du dépôt, dans la chambre où le dépôt en question se fait, comprend moins de 1% en volume d'oxygène (pouvant être résiduel dans la chambre ou éventuellement apporté), voire est dénuée d'oxygène, pour les couches à base de nitrures. De préférence, pour lesdites couches à base de nitrures, le débit d'oxygène lors du dépôt de la couche est nul, ou en d'autres termes il n'y a pas d'oxygène introduit volontairement dans l'atmosphère de pulvérisation de ladite cible.

La pression de dépôt (ou lors du dépôt) de chaque couche concernée par pulvérisation cathodique est en particulier d'au plus 2.5 µbar, de préférence est comprise dans un domaine allant de 1.5 µbar à 2.3 µbar. Par "pression de dépôt" on entend la pression régnant dans la chambre où est réalisé le dépôt de cette couche. L'application de la pression sélectionnée dans la ou les chambres de dépôt concernées contribue à obtenir une couche présentant une bonne résistance mécanique et à l'abrasion. La puissance de dépôt des couches est également comprise de préférence dans un domaine allant de 2 à 10 W/cm² de cible, lors du dépôt desdites couches, et la vitesse de défilement du substrat sous les différentes cibles est préférentiellement comprise dans un domaine allant de 0.1 à 3 m/min.

Le dépôt se fait en particulier sur le substrat déjà céramisé et non-chauffé. Selon un mode de réalisation particulièrement préféré, le substrat est soumis à un traitement thermique après dépôt de la couche 1 (et avant le dépôt de la couche 2) ou après dépôt de l'empilement, en particulier à un traitement de trempe ou un recuit, à une température par exemple de l'ordre de 750°C à 900°C, pendant environ une dizaine de minutes, ce traitement permettant de relaxer les contraintes et augmenter encore la dureté de la couche 1 de l'empilement selon l'invention.

Pour mémoire, la fabrication des plaques vitrocéramiques s'opère généralement comme suit : dans un four de fusion, on fond le verre de composition choisie pour former la vitrocéramique, puis on lamine le verre fondu en un ruban ou feuille standard en faisant passer le verre fondu entre des rouleaux de laminage et on découpe le ruban de verre aux dimensions souhaitées. Les plaques ainsi découpées sont ensuite céramisées de manière connue en soi, la céramisation consistant à cuire les plaques suivant le profil thermique choisi pour transformer le verre en le matériau polycristallin appelé « vitrocéramique » dont le coefficient de dilatation est nul ou quasi-nul et qui résiste à un choc thermique pouvant aller en particulier jusqu'à 700°C. La céramisation comprend généralement une étape d'élévation progressive de la température jusqu'au domaine de nucléation, une étape de traversée en plusieurs minutes (par exemple entre 5 et 60 minutes) de l'intervalle de nucléation (par exemple entre 650 et 830°C), une nouvelle élévation de la température pour permettre la croissance des cristaux (céramisation dans un intervalle allant par exemple de 850 à 1000°C, avec maintien de la température du palier de céramisation pendant plusieurs minutes (par exemple de 5 à 30 minutes) puis un refroidissement rapide jusqu'à la température ambiante.

Le cas échéant, le procédé comprend également une opération de découpe (généralement avant céramisation), par exemple par jet d'eau, traçage mécanique à la molette, etc. suivie par une opération de façonnage (meulage, biseautage,...).

Les exemples suivants illustrent sans la limiter la présente invention.

La dureté H et le module élastique E, lorsqu'ils sont mentionnés, sont été mesurés à l'aide d'un nanoindenteur de type DCMII-400, la pointe utilisée étant une pointe diamant pyramidale de type Berkovich (3 faces) selon la norme NF EN ISO 14577.

La résistance à l'abrasion des différents échantillons a été mesurée en utilisant un papier abrasif de type P800 commercialisé par Norton et incorporant des grains de carbure de silicium de 20 µm de diamètre équivalent moyen, en faisant un aller-retour de papier sur la surface de la vitrocéramique (nue ou revêtue) sur une distance de 3,81 cm à une vitesse de 15 aller-retour par minute et une pression appliquée de 5 N/cm². Les mesures en termes de nombre de rayures ont été faites à partir de photos prises en éclairant les échantillons à l'aide de diodes électroluminescentes 3 couleurs dans une boite à lumière, un traitement d'image (binarisé en noir et blanc et permettant de faire apparaitre les rayures en pixels noirs et la partie non rayée en pixels blanc) permettant d'analyser les photographies prises. Un "indice de rayabilité" a été évalué donnant un indice x correspondant au nombre y de pixels noirs relevé sur une image composée de 132000 pixels, divisé par 10000 (x=y/10000, l'indice x étant par exemple de 1 lorsqu'il y a 10000 pixels noirs, de 2 lorsqu'il y a 20000 pixels noirs, etc),

Le coefficient de frottement a également été mesuré à l'aide d'un appareil microscratch CSM commercialisé par CMS instrument. Une force constante de 1N a été appliquée sur une bille d'acier inox d'1cm de diamètre se déplaçant sur une distance de 2 cm à vitesse constante, trente passages étant réalisés en tout. Le coefficient de frottement mesuré était le rapport entre la force tangentielle et la force normale appliquées mesurées par des capteurs.

Les échantillons ont également été soumis à un test de frottement métallique sur un appareil de référence 5750 Linear Abraser (commercialisé par la société Taber) avec un frotteur plat en acier inox, le bras portant le frotteur faisant une course de 3,81 cm à une vitesse de 60 cycles par minute, avec une force d'application de 2 MPa. Le test consistait à effectuer des allers-retours et à déterminer le nombre de cycles à partir duquel un dépôt métallique était observé à la surface, ce test permettant de simuler le mouvement d'une casserole à la surface d'une vitrocéramique, les déplacements de casseroles générant deux types de dégradations : des rayures sous la forme de dépôts métalliques issus de la casserole, et des déformations plastiques ou fissurations ou abrasions de la vitrocéramique.

Dans ces exemples, on a utilisé des plaquettes de 20 cm par 20 cm du même substrat formé d'une vitrocéramique noire translucide, commercialisée sous la référence KeraBlack+ par la société Eurokera, ces plaquettes présentant une face supérieure lisse et une face inférieure munie de picots et une épaisseur de 4 mm.

Les plaquettes de vitrocéramique nue avaient une dureté de 7.5 GPa, obtenaient un indice de rayabilité de 4 et un coefficient de frottement (contact vitrocéramique /métal) de 0,3. Par ailleurs, sur la vitrocéramique nue, le frotteur selon le test de frottement sur l'appareil de référence 5750 Linear Abraser rayait la surface en moins d'une vingtaine de cycles.

Sur ces plaquettes, différentes couches ont été déposées comme suit chacune de ces couches étant déposée par pulvérisation cathodique assistée par magnétron en DC pulsé à basse pression de l'ordre de 2 µbar, avec une densité de puissance par unité surface de la cible inférieure à 6 W/cm²:
- sur une première série de plaquettes a été déposé un empilement selon l'invention comprenant une première couche 1 épaisse, de 1200 nm d'épaisseur et de 20 GPa, de dureté et de module élastique de 200 GPa, de nitrure de silicium, et une seconde couche de 5 nm d'épaisseur de TiOx à coefficient de frottement de 0.17.

Les plaquettes ainsi revêtues avaient une dureté de 20 GPa, obtenaient un indice de rayabilité inférieur à 0.7 et un coefficient de frottement de 0,2. Par ailleurs, sur la vitrocéramique ainsi revêtue, le frotteur selon le test de frottement sur l'appareil de référence 5750 Linear Abraser rayait la surface bien au-delà d'une centaine de cycles.
- sur une deuxième série de plaquettes a été déposé un empilement selon l'invention comprenant une première couche 1 épaisse, de 1200 nm d'épaisseur et de 20 GPa, de dureté et de module élastique de 200 GPa, de nitrure de silicium et une seconde couche de 5 nm d'épaisseur de TiZrOx à coefficient de frottement de 0.15.

Les plaquettes ainsi revêtues avaient une dureté de 20 GPa, obtenaient un indice de rayabilité inférieur à 0.4 et un coefficient de frottement de 0,18. Par ailleurs, sur la vitrocéramique ainsi revêtue, le frotteur selon le test de frottement sur l'appareil de référence 5750 Linear Abraser rayait la surface bien au-delà d'une centaine de cycles.
- sur une troisième série de plaquettes a été déposé un empilement selon l'invention comprenant une première couche 1 épaisse, de 1200 nm d'épaisseur et de 14.5 GPa de dureté et de module élastique de 140 GPa, de SiₓZr_{y}N_{z} avec un ratio atomique de Zr sur la somme Si + Zr, y / (x + y), de 32%, et une seconde couche de 5 nm d'épaisseur de TiOx ou de TiZrOx à coefficient de frottement de respectivement 0.17 et 0.15.

Les plaquettes ainsi revêtues avaient une dureté de 20 GPa, obtenaient un indice de rayabilité inférieur à 1 et un coefficient de frottement de 0.15 à 0.18. Par ailleurs, sur la vitrocéramique ainsi revêtue, le frotteur selon le test de frottement sur l'appareil de référence 5750 Linear Abraser rayait la surface bien au-delà d'une centaine de cycles.

A titre de comparaison:
- sur une quatrième série de plaquettes a été déposé une seule couche épaisse, de 1200 nm d'épaisseur et de 20 GPa de dureté et de module élastique de 200 GPa, de nitrure de silicium.

Les plaquettes ainsi revêtues avaient une dureté de 20 GPa, obtenaient un indice de rayabilité inférieur à 0.5 mais un coefficient de frottement de 0.4 (soit plus élevé que la vitrocéramique nue). Par ailleurs, sur la vitrocéramique ainsi revêtue, le frotteur selon le test de frottement sur l'appareil de référence 5750 Linear Abraser était abrasé en trente cycles par la couche de nitrure de silicium.
- sur une cinquième série de plaquettes a été déposée une seule couche mince de 5 nm d'épaisseur de TiOx ou de TiZrOx à coefficient de frottement de respectivement 0.17 et 0.15.

Les plaquettes ainsi revêtues avaient une dureté de 7.5 GPa, obtenaient un indice de rayabilité supérieur à 3 et un coefficient de frottement de 0.18; en outre, sur la vitrocéramique ainsi revêtue, le frotteur selon le test de frottement sur l'appareil de référence 5750 Linear Abraser rayait la surface en moins d'une vingtaine de cycles.
- sur une sixième série de plaquettes a été déposé un empilement comprenant une première couche 1 épaisse, de 1200 nm d'épaisseur et de 20 GPa de dureté et de module élastique de 200 GPa, de nitrure de silicium, et une seconde couche de 15 nm (supérieure à l'épaisseur limite de la deuxième couche selon l'invention) d'épaisseur de TiZrOx à coefficient de frottement de 0.15.

Les plaquettes ainsi revêtues avaient une dureté de 20 GPa, obtenaient un indice de rayabilité remontant (par rapport aux empilements précédents définis selon l'invention qui ne dépassaient pas 1) jusqu'à 2 environ (soit une bien moindre résistance aux rayures) et un coefficient de frottement de 0.15.

Les exemples précédents montrent que l'empilement selon l'invention permet notamment d'obtenir à la fois une réduction considérable des rayures visibles et limite considérablement l'apparition de colorations dues aux frottements d'ustensiles métalliques.

Divers tests de nettoyages de surface portant des traces de café, lait, vinaigres, sauce tomate brulée, à froid et à chaud, avec différents produits ménagers (tels que les produits de marque VitroClen de la société Reckitt Benckiser ou un produit Nettoyant induction et vitrocéramique de la société Kiraviv) ont également démontrés que la vitrocéramique revêtue de la couche sélectionnée selon l'invention était facile à nettoyer et que la couche ne se dégradait pas chimiquement. De même cette couche ne s'est pas délaminée après des chocs thermique à 620°C, ni n'a montré de dégradation après 100 h à 580°C.

Les articles selon l'invention peuvent notamment être utilisées avec avantage pour réaliser une nouvelle gamme de plaques de cuisson pour cuisinières ou tables de cuisson ou une nouvelle gamme de tables de travail, consoles, crédences, ilots centraux, etc.

## Revendications

1. Article vitrocéramique, comprenant au moins un substrat, tel qu'une plaque, en vitrocéramique, ledit substrat étant revêtu en au moins une zone d'au moins un empilement formé:
- 1) d'au moins une couche de nitrure métallique ou de nitrure de métalloïde(s), ladite couche présentant une épaisseur d'au moins 200 nm, de préférence d'au moins 700 nm, et en particulier d'au moins 1 µm, et une dureté d'au moins 14 GPa, et
- 2) d'au moins une couche d'oxyde métallique ou de nitrure de métalloïde(s), ladite couche présentant une épaisseur inférieure à 14 nm, de préférence entre 1 et 10 nm, et présentant un coefficient de frottement inférieur à 0.25, lesdites couches 1 et 2 étant au contact l'une de l'autre, la couche 2 étant plus éloignée du substrat que la couche 1.

2. Article vitrocéramique selon la revendication 1, **caractérisé en ce que** ladite couche 1 présente un module d'élasticité E supérieur à 140 GPa en particulier supérieur à 150 GPa.

3. Article vitrocéramique selon l'une des revendications 1 à 2, **caractérisé en ce que** le revêtement incluant ledit empilement ne contient qu'un seul empilement de couches 1 et 2, voire ne contient que ledit empilement.

4. Article vitrocéramique selon l'une des revendications 1 à 3, **caractérisé en ce que** le substrat est revêtu d'au moins une couche d'émail ou de peinture sur ou sous ledit empilement.

5. Article vitrocéramique selon l'une des revendications 1 à 4, **caractérisé en ce que** ledit empilement est directement en contact avec ledit substrat en vitrocéramique, sans autre couche de revêtement sous-jacente.

6. Article vitrocéramique selon l'une des revendications 1 à 5, **caractérisé en ce que** ledit empilement est en contact avec l'atmosphère ambiante.

7. Article vitrocéramique selon l'une des revendications 1 à 6, **caractérisé en ce qu'**il s'agit d'un dispositif de cuisson comportant en outre un ou plusieurs éléments de chauffage.

8. Procédé de fabrication d'un article en vitrocéramique selon l'une des revendications 1 à 7, cet article comprenant au moins un substrat, tel qu'une plaque, en vitrocéramique, dans lequel on dépose, sur au moins une zone dudit substrat:
1) au moins une couche de nitrure métallique ou de nitrure de métalloïde(s), ladite couche présentant une épaisseur d'au moins 200 nm, de préférence d'au moins 700 nm, et en particulier d'au moins 1 µm, et une dureté d'au moins 14 GPa, puis - 2) au moins une couche d'oxyde métallique ou de nitrure de métalloïde(s), ladite couche présentant une épaisseur inférieure à 14 nm, de préférence entre 1 et 10 nm, et présentant un coefficient de frottement inférieur à 0.25, lesdites couches 1 et 2 étant au contact l'une de l'autre.

9. Procédé selon la revendication 8, **caractérisé en ce que** ledit substrat est soumis à un traitement de trempe ou à un recuit à une température de 750 à 900°C après dépôt de la couche 1 ou après dépôt de l'empilement.

10. Procédé selon l'une des revendications 8 ou 9, **caractérisé en ce que** le dépôt de la couche 1 se fait par pulvérisation cathodique, notamment assistée par magnétron, ladite pulvérisation cathodique étant de préférence de type DC pulsé, et le dépôt de la couche 2 se fait par pulvérisation cathodique ou par voie liquide.

## Patentansprüche

1. Glaskeramikgegenstand, umfassend mindestens ein Substrat, wie zum Beispiel ein Kochfeld, aus Glaskeramik, wobei das Substrat in mindestens einem Bereich mit mindestens einer Stapelung beschichtet ist, die ausgebildet ist aus:
- 1) mindestens einer Schicht aus metallischem Nitrid oder nicht metallischem/metallischen Nitrid(en), wobei die Schicht eine Dicke von mindestens 200 nm, vorzugsweise mindestens 700 nm, und im Besonderen mindestens 1 µm und eine Härte von mindestens 14 GPa aufweist, und
- 2) mindestens einer Schicht aus metallischem Oxid oder nicht metallischem/metallischen Nitrid(en), wobei die Schicht eine Dicke von weniger als 14 nm, vorzugsweise zwischen 1 und 10 nm aufweist und einen Reibungskoeffizienten von weniger als 0,25 aufweist, wobei die Schichten 1 und 2 in Kontakt miteinander stehen, wobei die Schicht 2 von dem Substrat weiter entfernt als die Schicht 1 ist.

2. Glaskeramikgegenstand nach Anspruch 1,
**dadurch gekennzeichnet, dass** die Schicht 1 einen Elastizitätsmodul E von mehr als 140 GPa, im Besonderen mehr als 150 GPa aufweist.

3. Glaskeramikgegenstand nach einem der Ansprüche 1 bis 2,
**dadurch gekennzeichnet, dass** die Beschichtung einschließt, dass die Stapelung nur eine einzelne Stapelung der Schichten 1 und 2 enthält, sogar nur die Stapelung enthält.

4. Glaskeramikgegenstand nach einem der Ansprüche 1 bis 3,
**dadurch gekennzeichnet, dass** das Substrat mit mindestens einer Schicht aus Emaille oder aus Lack auf oder unter der Stapelung beschichtet ist.

5. Glaskeramikgegenstand nach einem der Ansprüche 1 bis 4,
**dadurch gekennzeichnet, dass** die Stapelung direkt in Kontakt mit dem Glaskeramiksubstrat steht, ohne weitere darunterliegende Beschichtungsschicht.

6. Glaskeramikgegenstand nach einem der Ansprüche 1 bis 5,
**dadurch gekennzeichnet, dass** die Stapelung in Kontakt mit der Umgebungsatmosphäre steht.

7. Glaskeramikgegenstand nach einem der Ansprüche 1 bis 6,
**dadurch gekennzeichnet, dass** es sich um eine Kochvorrichtung handelt, die ferner ein oder mehrere Heizelemente beinhaltet.

8. Verfahren zum Herstellen eines Glaskeramikgegenstands nach einem der Ansprüche 1 bis 7, dieser Gegenstand umfassend mindestens ein Substrat, wie zum Beispiel ein Kochfeld, aus Glaskeramik, wobei auf mindestens einen Bereich des Substrats abgelagert wird
1) mindestens eine Schicht aus metallischem Nitrid oder nicht metallischem/metallischen Nitrid(en), wobei die Schicht eine Dicke von mindestens 200 nm, vorzugsweise mindestens 700 nm, und im Besonderen mindestens 1 µm und eine Härte von mindestens 14 GPa aufweist, dann
- 2) mindestens eine Schicht aus metallischem Oxid oder nicht metallischem/metallischen Nitrid(en), wobei die Schicht eine Dicke von weniger als 14 nm, vorzugsweise zwischen 1 und 10 nm aufweist und einen Reibungskoeffizienten von weniger als 0,25 aufweist, wobei die Schichten 1 und 2 in Kontakt miteinander stehen.

9. Verfahren nach Anspruch 8, **dadurch gekennzeichnet, dass** das Substrat einer Abschreckbehandlung oder einem Tempern bei einer Temperatur von 750 bis 900 °C nach dem Ablagern der Schicht 1 oder nach dem Ablagern der Stapelung unterzogen wird.

10. Verfahren nach einem der Ansprüche 8 oder 9,
**dadurch gekennzeichnet, dass** das Ablagern der Schicht 1 durch Kathodenzerstäubung, insbesondere durch ein Magnetron unterstützt, erfolgt, wobei die Kathodenzerstäubung vorzugsweise von einer Art eines gepulsten Gleichstroms ist, und das Ablagern der Schicht 2 durch Kathodenzerstäubung oder auf flüssigem Weg erfolgt.

## Claims

1. A glass-ceramic article, comprising at least one substrate, such as a plate, made of glass-ceramic, said substrate being coated in at least one zone with at least one stack formed:
- 1) of at least one layer of metal nitride or of semimetal nitride, said layer exhibiting a thickness of at least 200 nm, preferably of at least 700 nm and in particular of at least 1 µm, and a hardness of at least 14 GPa, and
- 2) of at least one layer of metal oxide or of semimetal nitride, said layer exhibiting a thickness of less than 14 nm, preferably between 1 and 10 nm, and exhibiting a coefficient of friction of less than 0.25,
said layers 1 and 2 being in contact with each other, the layer 2 being further from the substrate than the layer 1.

2. The glass-ceramic article as claimed in claim 1, **characterized in that** said layer 1 exhibits a modulus of elasticity E of greater than 140 GPa, in particular of greater than 150 GPa.

3. The glass-ceramic article as claimed in either of claims 1 and 2, **characterized in that** the coating including said stack contains only a single stack of layers 1 and 2, indeed even contains only said stack.

4. The glass-ceramic article as claimed in one of claims 1 to 3, **characterized in that** the substrate is coated with at least one layer of enamel or of paint on or under said stack.

5. The glass-ceramic article as claimed in one of claims 1 to 4, **characterized in that** said stack is directly in contact with said substrate made of glass-ceramic, without other underlying coating layer.

6. The glass-ceramic article as claimed in one of claims 1 to 5, **characterized in that** said stack is in contact with the ambient atmosphere.

7. The glass-ceramic article as claimed in one of claims 1 to 6, **characterized in that** it is a cooking device additionally comprising one or more heating elements.

8. A process for the manufacture of an article made of glass-ceramic as claimed in one of claims 1 to 7, this article comprising at least one substrate, such as a plate, made of glass-ceramic, in which there is deposited, on at least one zone of said substrate:
1) at least one layer of metal nitride or of semimetal nitride, said layer exhibiting a thickness of at least 200 nm, preferably of at least 700 nm and in particular of at least 1 µm, and a hardness of at least 14 GPa, then
2) at least one layer of metal oxide or of semimetal nitride, said layer exhibiting a thickness of less than 14 nm, preferably between 1 and 10 nm, and exhibiting a coefficient of friction of less than 0.25,
said layers 1 and 2 being in contact with each other.

9. The process as claimed in claim 8, **characterized in that** said substrate is subjected to a tempering treatment or to an annealing at a temperature of 750°C to 900°C after deposition of the layer 1 or after deposition of the stack.

10. The process as claimed in either of claims 8 and 9, **characterized in that** the deposition of the layer 1 is carried out by cathode sputtering, in particular magnetron-enhanced, said cathode sputtering preferably being of pulsed DC type, and the deposition of the layer 2 is carried out by cathode sputtering or by the liquid route.
